# EUROPEAN PATENT SPECIFICATION

(11) **EP 1 323 773 B1**
(45) Date of publication and mention of the grant of the patent: **09.05.2007**
(21) Application number: 01956927.6
(22) Date of filing: 16.08.2001
(51) Int. Cl.: C08L 5/14, C08B 37/00, C08L 5/00, C12P 19/06, A23L 1/0526, A23L 1/054

(54) **TRANSPARENT, AQUEOUS ELASTOMER**
TRANSPARENTES WÄSSRIGES ELASTOMER
ELASTOMERE TRANSPARENT AQUEUX

(30) Priority: 16.08.2000 JP 2000246873; 23.08.2000 JP 2000252192
(43) Date of publication of application: 02.07.2003
(73) Proprietor: The Nisshin OilliO Group, Ltd., Tokyo 104-8285 (JP)
(72) Inventor: ADACHI, Katsura, Kumagaya-shi, Saitama 360-0026 (JP); OYAMA, Keiichi, Yokohama-shi, Kanagawa 235-0023 (JP); OI, Yukiko, Yokohama-shi, Kanagawa 233-0008 (JP); UZUHASHI, Yuji, Ina-shi, Nagano 399-4431 (JP); KOJIMA, Masaaki, Ina-shi, Nagano 399-4431 (JP); SAKAI, Takehiko, Ina-shi, Nagano 399-4431 (JP)
(74) Representative: Hubert, Philippe
(86) International application number: PCT/JP2001/007068
(87) International publication number: WO 2002/014420

(56) References cited:
- EP-A- 0 185 511
- EP-A- 0 319 129
- EP-A- 0 549 230
- EP-A- 0 602 990
- EP-A1- 0 602 990
- EP-A2- 0 185 511
- EP-A2- 0 319 129
- JP-A- 2000 192 100
- JP-A- 2001 019 943
- US-A- 3 966 618

## Description

### FIELD OF THE INVENTION

The present invention relates to a highly transparent, flexible aqueous elastic body excellent in strength against strain. which includes at least one thickening agent selected from galactomannans, and a highly transparent xanthan gum in wich water-insoluble components are decomposed or removed in combination characterised in that said xanthan gum is hydrolysed with a protease and is partially or completely modified by heating.

### BACKGROUND OF THE INVENTION

An aqueous material, which is transparent and contains a large amount of elastic water, can be employed in drugs, medical tools, pharmaceutical materials, cosmetics or housewares . Typical substances usable for the aqueous material include aqueous synthetic polymers such as polyvinyl alcohol and cross-linked sodium polyacrylate.

On the other hand, natural polysaccharides are tried on applications to foods as components for producing viscoelastic transparent aqueous compositions. Such components have been known in the art to include carrageenan, gelatin and gellan gum. Japanese Patent Application Laid-Open Nos. 61/252,677 and 01/040,542 disclose compositions including carrageenan. Japanese Patent Application Laid-Open Nos. 01/074,239 and 10/248,505 disclose compositions including gellan gum.

Although these aqueous compositions often have high elastic moduli in physical properties, they are generally poor in flexibility and easily rupturable when they are strained. Accordingly, the need for increasing the density in water to elevate the strength results in poor transparency and white turbidness disadvantageously.

Although the above-mentioned aqueous gels of the above synthetic polymeric materials have high transparency, they are not yet sufficient in physical properties. In addition, chemical synthetic substances have problems associated with ill effects on various environments and human bodies, which are not directed to in the present invention.

On the other hand, natural polysaccharides require no consideration of biodegradation, safety of human bodies, and environmental problems associated with waste water, gases and solvents caused from chemical synthetic reactions. They are widely general-purpose substances, which can be employed safely in any industrial fields. Although their several applications are mainly tried to foods as described above, carrageenan and gellan gum, having been employed as bases in the art, are required to react with ions of a metal such as calcium and magnesium. If their amount is increased to elevate the rupture strength, a problem is caused because an obtained aqueous composition exhibits white turbidness similar to agars. Gelatin is a protein and therefore has an isoelectric point. It is insolubilized at a pH near the isoelectric point and exhibits white turbidness. Even if a single aqueous solution in combination with transparent polysaccharides produces a good aqueous composition, when the aqueous composition is solidified, it lowers transparency and exhibits white turbidness by a synergistic effect generally. If their density in the composition is lowered to achieve transparency, a physical property with fluidity is caused unsatisfactorily.

These aqueous compositions have a disadvantage because of a freezing resistance, in which they are freeze-denatured under freezing, tissues of the aqueous composition are ruptured, and water is separated on thawing. Commodities utilizing the aqueous compositions cause problems associated with deterioration of the commodities, for example, when they are stored during winter under freezing depending on regions.

### SUMMARY OF THE INVENTION

The present invention accordingly has an object to provide an aqueous material composed of natural substances and having a high transmissivity, a low elastic modulus, and a physical property deformable with a slight force but hardly ruptured. In a word, the object is to obtain an aqueous elastic body that is highly transparent, flexible, hardly fragile, and excellent in strength against strain. In addition, it is to obtain an aqueous elastic body that is hardly freeze-denatured during freezing and thawing, hardly water-separated, and excellent in freezing resistance.

The Inventors have intensively studied to solve the above problems and finally found a certain fact that led them to complete the present invention. The fact is that an aqueous elastic body, which comprises at least one thickening agent selected from galactomannans, and a xanthan gum with water-insoluble components decomposed or removed which is hydrolysed with a protease and is partially or completely modified by heating can provide an aqueous composition that does not lose transparency and has a highly flexible and strain-resistive elasticity. The highly transparent composition herein referred to has a transmissivity above 90 %T measured using a spectrophotometer at a temperature of 25 °C, with a measuring wavelength of 655 nm, in an optical path of 10 mm.

The galactomannans according to the present invention are polysaccharides having a main chain of D-mannose with side chains of D-galactose. Exemplary natural polysaccharides include a locust bean gum, a tara gum, a guar gum and a cassia gum

Although these polysaccharides have no problems associated with physical properties, purified one is preferable to improve transparency. Among those, locust bean gum is most excellent in physical property and transparency.

On the other hand, xanthan gum is one of microbial polysaccharides produced by fermenting a carbohydrate such as starch, glucose and sucrose using a microorganism, *Xanthomonas campestris.* The xanthan gum employed in the present invention is obtained by an established rule, and water-insoluble components present in the xanthan gum are decomposed or removed therefrom. The use of the xanthan gum makes it possible to obtain not only a highly transparent composition but also a flexible aqueous elastic body, which is the target of the present invention. When a conventional xanthan gum without these processes is employed to obtain a composition, the composition is formed in an elastic body as known. The elastic body is different, however, in physical property from the target of the present invention and accordingly provides no transparent aqueous composition naturally. The water-insoluble components can be decomposed by hydrolysis using an alkali or an acid or by hydrolysis using an enzyme in general. The water-insoluble components can be removed using an adsorbent such as diatom earth (celite), terra alba (clay), active carbon, other clays, and ceramics in general. Particularly, those hydrolyzed with a protease are practically preferable in cost because they can be commercially available in general. These water-insoluble components are considered to contain mainly protein components, which expectedly effect much on the physical property of an aqueous composition using galactomannans together. Preferable but not particularly limiting proteases include alkaline and neutral proteases. A method of treating with a protease is disclosed in Japanese Patent Application Laid-Open No. 50/121,493.

When a higher rupture strength is required for use or distribution, galactomannans modified in part or all by heating may be employed in the present invention. A preferably heat-treated product has a water content below 50% and is obtained by heating the galactomannans at 55-100 °C for five minutes to 200 hours or at 100-150 °C for one minute to 50 hours. Japanese Patent Application No. 10/019,096 discloses such galactomannans, which are suitable for the present invention. It discloses the use of the galactomannans together with a xanthan gum and describes a strong gel, which is though different in object from a transparent flexible elastic body of the present invention that employs a characterized xanthan gum.

For the same reason, a xanthan gum modified in part or all by heating may be employed in the xanthan gum to achieve the same effect. A preferable heat-treated product has a water content below 50% and is obtained by heating the galactomannans at 55-150 °C for one hour to 50 hours. This is also disclosed in Japanese Patent Application No. 10/019,096.

As for at least one thickening agent selected from galactomannans, locust bean gum is preferable. Preferably, the locust bean gum has a weight ratio ranging from 1:4 to 4:1 to a xanthan gum containing water-insoluble components decomposed or removed. Preferably, the locust bean gum has a weight ratio particularly ranging from 1:1.5 to 1.5:1 to the xanthan gum containing water-insoluble components decomposed or removed. If the ratio falls outside the range, although the rupture strength tends to lower, there are no problems associated with the rupture strength in the meaning of the strength against strain because the ratio may be adjusted desirably.

Preferably, at least one thickening agent selected from galactomannans and the xanthan gum in total have a density of 0.1-10 wt. % in an aqueous composition. If the density is below 0.1 wt. %, although the rupture strength tends to lower, there are no problems associated with the rupture strength in the meaning of the strength against strain because the ratio may be adjusted desirably. If the density is above 10 wt. %, faults are caused because of a hard workability to disperse the powder, when a powder is dissolved in an aqueous system, and a lowered transparency. Therefore, the elastic body may be obtained within a tolerance desirable for the use and the manufacturing machine.

The transparent aqueous elastic body according to the present invention can be represented by characteristic values of dynamic viscoelasticity. Preferably, they include a storage elastic modulus, G', of 1-1,000 Pa and a loss tangent, tan δ, (Loss elastic modulus G"/Storage elastic modulus G') below 10⁻¹ at a temperature of 25 °C with a frequency of 1 Hz and a strain of 10⁻¹-10 %. They are values for specifying the character of a rubbery elastic body and indicate the nature of the elastic body, which does not mean an excessively strong elasticity. Preferably, a ratio ranges from 1/2 to 2 between logarithms of dynamic storage elastic moduli G' when strain factors are 1 % and 100 %, respectively, at a temperature of 25 °C with a frequency of 1 Hz. This means that the storage elastic modulus G' has a small dependency on strain and causes no variation in the physical property when greatly strained. These values can be measured using a device for measuring viscoelasticity such as a rheometer of a stress control type or a strain control type.

The aqueous elastic body of the present invention, which comprises at least one thickening agent selected from galactomannans, and a xanthan gum, in which water-insoluble components are decomposed or removed, is frozen to -20°C while lowering the temperature at a rate of -2.0 °C/hour and then restored up to a temperature of 10°C while raising the temperature at a rate of 2.0 °C/hour in the freezing resistance. The amount of water separated from the restored aqueous elastic body is determined 0.01-5 wt. %, preferably 0.01-2 wt. %, of a weight of the aqueous elastic body before frozen. Therefore, it is found that the aqueous elastic body is excellent.

The transparent aqueous elastic body of the present invention may include water-soluble polysaccharides and water-soluble alcohol in combination in accordance with the target physical property. Other components may also be mixed without any problems if they can retain the characteristics of the present invention.

The rubbery aqueous composition of the present invention can be applied to drugs, medical tools , pharmaceutical materials, cosmetics, housewares and foods. In addition, it can be widely utilized as a material in the industrial fields of architecture, agriculture, feeds, fertilizers, paints, inks, ceramics, resins, and adhesives.

An aqueous material of the present invention is composed of natural substances that are highly safe to effect on environments and human bodies. It is an aqueous elastic body that is highly transparent, flexible, hardly fragile, and excellent in strength against strain. The aqueous elastic body can be applied to drugs, medical tools, pharmaceutical materials, cosmetics, housewares and foods. In addition, it can be widely utilized as a material in the industrial fields of architecture, agriculture, feeds, fertilizers, paints, inks, ceramics, resins, and adhesives. When the present invented product is utilized in different industries, it can be utilized with another third component in mixture. In addition, as it appears the beauty, it has a great utility value as ornamentation.

### BRIEF DESCRIPTION OF THE DRAWING

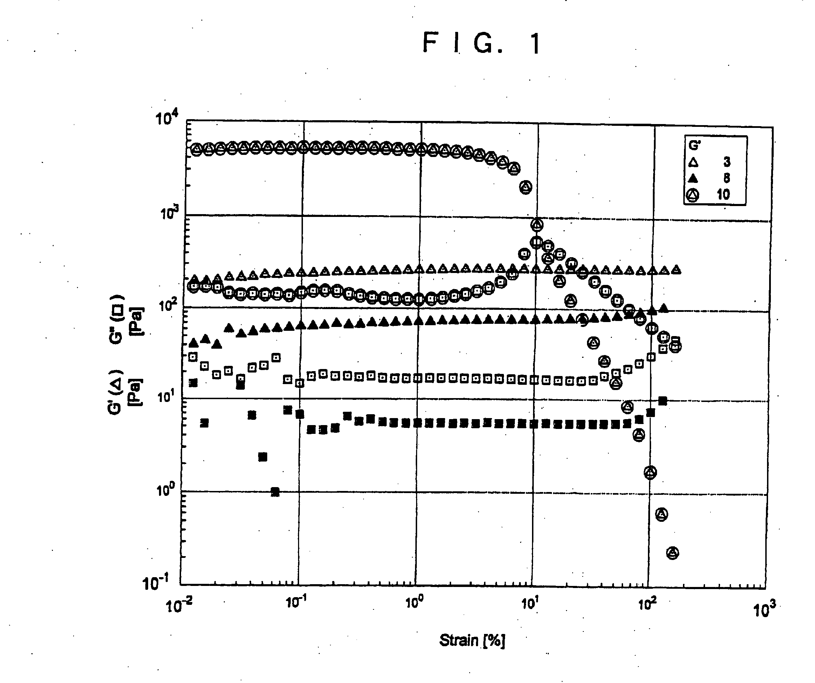

Fig. 1 is a graph showing measured results on the strain dependency regarding the present invented products 3, 8 and the comparative product 10.

### DETAILED DESCRIPTION OF THE PREFERRED EMBODIMENTS

The present invention will be described below with reference to specific Examples, Comparative Examples and References, which are intended to exemplify the invention and not to limit the invention in any way.

### Examples 1-10 and Comparative Examples 1-5

### 1. Preparation of aqueous elastic body

In accordance with Table 1, water is agitated in a one-liter container at 25 °C using a fan-type agitator and a thickening agent is gradually added thereto. After dispersion, heating is started, then the mixture is agitated and dissolved for 30 minutes at 80 °C. The mixture is partly poured into a deep Schale (60 mm φ × 60 mm) by an amount enough to overflow slightly therefrom, then quietly left at 25 °C for 12 hours. Thereafter, parts leaked out of the Schale are cut flat using a knife to obtain the present invented products and the comparative products.

### 2. Evaluation test for physical property of aqueous elastic body

The trial products obtained in the article 1 are evaluated on physical properties using a rheometer (Rheometer CW, available from Fudo Industry Co., Ltd.). A disc die with a diameter of 10 mm is attached as an adapter for directly compressing the trial product to observe whether the trial product is ruptured when it is compressed and strained by 30 mm at a compression rate of 30 cm/min. If it is not ruptured, a strength (g/cm²) at the time when it is compressed by 30 mm (hereinafter referred to as a "compressive strength") is measured each (Examples 1-10). If it is ruptured, a distance and a strength (g/cm²) at the time when it is ruptured (hereinafter referred to as a "rupture strength") are measured each (Comparative Examples 1-8). As for the present invented products and the comparative products, formulas are shown in Tables 1 and 3, and measured results are shown in Tables 2 and 4.

### 3. Measurement for transmissivity of aqueous elastic body

Transmissivity is measured under a condition at a temperature of 25 °C with a measuring wavelength of 655 nm in an optical path of 10 mm (a four-side transparent quartz cell, 10mm × 10mm) using a spectrophotometer (JASCO V-500, available from JASCO Corp.). Water is employed as the reference. Measured results of the present invented products and the comparative products are shown in Tables 2 and 4.

**Table 1: Examples 1-10 (Formulas)**

| * according to the invention | | | | | Unit: g | | | | | |
|---|---|---|---|---|---|---|---|---|---|---|
| Example No. | 1 | 2 | 3* | 4 | 5 | 6 | 7* | 8* | 9 | 10* |
| Xanthan gum A¹⁾ | 1 | | | 1.8 | 3.2 | 0.5 | | | 1 | |
| Xanthan gum B²⁾ | | 1 | | | | | | | | |
| Xanthan gum C³⁾ | | | 1 | | | | 0.5 | 0.5 | | 0.2 |
| Locust bean gum A⁴⁾ | 1 | 1 | 1 | 4.2 | 0.8 | 0.5 | 0.5 | | | |
| Locust bean gum B⁵⁾ | | | | | | | | 0.5 | | 0.2 |
| Guar gum | | | | | | | | | 1 | |
| Water | 198 | 198 | 198 | 194 | 196 | 199 | 199 | 199 | 198 | 199.6 |
| Total | 200 | 200 | 200 | 200 | 200 | 200 | 200 | 200 | 200 | 200 |

| | | | | | | | | | | |
|---|---|---|---|---|---|---|---|---|---|---|
| ¹⁾A commercial product available from Kelko Co., Ltd. is used as a xanthan gum, which is obtained by hydrolyzing water-insoluble components using protease-treatment of a xanthan gum obtained by an established rule. ²⁾A purified product obtained by celite-treating by pressure filtration as a xanthan gum of 1 wt% in an aqueous solution, then clay-treating to remove water-insoluble components, ethanol-precipitating and drying. The xanthan gum is obtained by an established rule (water-insoluble components are not decomposed nor removed) and is commercially available from Kelko Co., Ltd. ³⁾A commercial product available from Nisshin Seiyu Co., Ltd. is used as a xanthan gum, which is obtained by hydrolyzing water-insoluble components using protease-treatment of a xanthan gum obtained by an established rule, and then heating it. ⁴⁾ A product commercially available from San-Ei Gen F.F.I., Inc is used. ⁵⁾A xanthan gum obtained by heating the above product⁴⁾ at 120 °C for 10 minutes is used. ⁶⁾A product commercially available from San-Ei Gen F . F . I . , Inc is used. | | | | | | | | | | |

**Table 2: Examples 1-10 (Evaluated results)**

| O: Not ruptured, ×: Ruptured | | | | | | | | | | |
|---|---|---|---|---|---|---|---|---|---|---|
| Example No. | 1 | 2 | 3* | 4 | 5 | 6 | 7* | 8* | 9 | 10* |
| Ruptured or not | ○ | ○ | ○ | ○ | ○ | ○ | ○ | ○ | ○ | ○ |
| Compressive strength (g/cm²) | 412 | 368 | 683 | 123 | 86.1 | 102 | 185 | 235 | 134 | 63.1 |
| Trans-missivity (%T) | 92.5 | 93.2 | 91.8 | 90.8 | 94.3 | 95.1 | 96.2 | 94.3 | 92.4 | 97.5 |

| | | | | | | | | | | |
|---|---|---|---|---|---|---|---|---|---|---|
| * according to the invention | | | | | | | | | | |

**Table 3: Comparative Examples 1-8 (Formulas)**

| Unit: g | | | | | | | | | | |
|---|---|---|---|---|---|---|---|---|---|---|
| Example No. | 1 | 2 | 3 | 4 | 5 | 6 | 7 | 8 | 9 | 10 |
| Xanthan gum D⁷⁾ | 1 | | 1.8 | 3.2 | 0.5 | | | | 1 | |
| Xanthan gum F⁸⁾ | | 1 | | | | 0.5 | 0.5 | 0.2 | | |
| Locust bean gum A | 1 | 1 | 4.2 | 0.8 | 0.5 | 0.5 | 0.5 | | | |
| Locust bean gum B | | | | | | | | 0.5 | 0.2 | |
| Carra-g eenan | | | | | | | | | 1 | |
| Gellan gum | | | | | | | | | | 0.8 |
| Calcium lactate | | | | | | | | | | 0.2 |
| Water | 198 | 198 | 194 | 196 | 199 | 199 | 199 | 199.6 | 198 | 199 |
| Total | 200 | 200 | 200 | 200 | 200 | 200 | 200 | 200 | 200 | 200 |

| | | | | | | | | | | |
|---|---|---|---|---|---|---|---|---|---|---|
| ⁷⁾A commercial product available from Kelko Co., Ltd. is used as a xanthan gum obtained by an established rule. Its water-insoluble components are not decomposed nor removed. ⁸⁾A commercial product available from Nisshin Seiyu Co., Ltd. is used as a xanthan gum, which is obtained by heating a xanthan gum obtained by an established rule. Its water-insoluble components are not decomposed nor removed. | | | | | | | | | | |

**Table 4: Comparative Examples 1-8 (Evaluated results)**

| : Not ruptured, x: Ruptured | | | | | | | | | | |
|---|---|---|---|---|---|---|---|---|---|---|
| Comparative Example No. | 1 | 2 | 3 | 4 | 5 | 6 | 7 | 8 | 9 | 10 |
| Ruptured or not | × | × | × | × | × | × | × | × | × | × |
| Rupture strength (g/cm²) | 523 | 956 | 183 | 143 | 186 | 352 | 451 | 155 | 312 | 856 |
| Trans-missi vity (%T) | 12.1 | 13.2 | 32.3 | 3.4 | 25.3 | 28.3 | 27.5 | 65.3 | 14.1 | 56.0 |

The above results demonstrate that the present invented products are such aqueous elastic compositions that are highly transparent, flexible, hardlyfragile, and excellent in strength against strain. On the other hand, the comparative products have lower transmissivity and can be ruptured when they are compressed and greatly strained. The comparative product tends to have relatively higher rupture strength than the compressive strength of the present invented product in the same formula, and indicates failed flexibility.

4. The present invented products 3, 8 are subjected to a test for strain dependency measurement with a frequency of 1 Hz at a temperature of 20 °C on the elastic body using a device for measuring dynamic viscoelasticity (Ares dynamic viscoelasticity meter available from Rheometric Inc.) to evaluate dynamic viscoelasticity of the present invented products obtained in the article 1. The results measured at strain factors of 1% and 100% are shown in Tables 5 and 6. The result measured on the comparative product 10 is shown in Table 7. Fig. 1 shows strain dependency measurements on the present invented products 3, 8 and the comparative product 10.

**Table 5: Present invented product 3**

| Strain factor | 1 % | 100 % |
|---|---|---|
| Storage elastic modulus, G' | 2.6 × 10² | 2.7 × 10² |
| Loss elastic modulus, G" | 1.7 × 10¹ | 3.1 × 10¹ |
| Loss tangent, tan δ | 6.5 × 10⁻² | 1.1 × 10⁻¹ |

A ratio between storage elastic moduli at strain factors of 1% and 100% is equal to 0.99.

**Table 6: Present invented product 8**

| Strain factor | 1 % | 100 % |
|---|---|---|
| Storage elastic modulus, G' | 7.3 × 10¹ | 9.9 × 10¹ |
| Loss elastic modulus, G" | 5.5 × 10⁰ | 7.3 × 10⁰ |
| Loss tangent, tan δ | 7.5 × 10⁻² | 7.4 × 10⁻² |

A ratio between storage elastic moduli at strain factors of 1% and 100% is equal to 0.93.

**Table 7: Comparative product 10**

| Strain factor | 1 % | 100 % |
|---|---|---|
| Storage elastic modulus, G' | 5.1 × 10³ | 1.7 × 10° |
| Loss elastic modulus, G" | 1.3 × 10² | 6.5 × 10¹ |
| Loss tangent, tan δ | 2.4 × 10⁻² | 3.8 ×10¹ |

A ratio between storage elastic moduli at strain factors of 1% and 100% is equal to 16.

The above results demonstrate that the present invented product is given less strain dependency and characterized by a properly flexible elastic body. In contrast, the comparative product is demonstrated to have larger strain dependency and, when it is greatly strained, its physical property is varied unstable.

### 5. Freezing resistance test (Water separation rate test) for aqueous elastic body

As for Examples 2, 3, 6 and Comparative Examples 9, 10, an amount of water separation is measured each using the trial product obtained in the article 1. The present invented and comparative products with a size of 5cm × 5cm × 5cm are frozen to -20 °C while lowering the temperature at a rate of -2.0 °C/hour and then restored up to a temperature of 10 °C while raising the temperature at a rate of 2.0 °C/hour. The amount of water separation is then measured by wiping off a surface of the product with filter paper. A water separation rate is represented by a percentage of a weight before freezing. Measured results are shown in Table 8.

**Table 8: Water separation rate after freezing**

| | Example 2 | Example 3 | Example 6 | Comparative Example 9 | Comparative Example 10 |
|---|---|---|---|---|---|
| Water separation rate (%) | 0.3 | 0.2 | 0.4 | 6.2 | 8.8 |

## Claims

1. A transparent aqueous elastic body, comprising:
at least one thickening agent selected from galactomannans; and
a xanthan gum, in which water-insoluble components are decomposed or removed,
**characterized in that** said xanthan gum is hydrolyzed with a protease and is partially or completely modified by heating.

2. The transparent aqueous elastic body according to claim 1, wherein said aqueous elastic body has a transmissivity above 90 %T at a temperature of 25 °C, with a measuring wavelength of 655 nm, and in a measuring optical path of 10 mm.

3. The transparent aqueous elastic body according to claim 1, wherein said galactomannans selected as thickening agents are partially or completely modified by heating.

4. The transparent aqueous elastic body according to claim 1, wherein said at least one thickening agent selected from galactomannans and said xanthan gum have a weight ratio ranging from 1:4 to 4:1.

5. The transparent aqueous elastic body according to claim 1, wherein said at least one thickening agent selected from galactomannans and said xanthan gum in total have a density of 0.1-10 wt. % in an aqueous composition.

6. The transparent aqueous elastic body according to claim 1, wherein said aqueous elastic body has a rheological property, including a dynamic storage elastic modulus, G', of 1 - 1.000 Pa and a loss tangent, tan δ, below 10⁻¹ at a temperature of 20 °C with a frequency of 1 Hz and a strain of 10⁻¹-10 %.

7. The transparent aqueous elastic body according to claim 1, wherein said aqueous elastic body has a rheological property, including a ratio ranging from 1/2 to 2 between logarithms of dynamic storage elastic moduli G' when strain factors are 1 % and 100 %, respectively, at a temperature of 20 °C with a frequency of 1 Hz.

8. The transparent aqueous elastic body according to claim 1, wherein said aqueous elastic body is frozen to -20 °C while lowering the temperature at a rate of -2.0 °C/hour and then restored up to a temperature of 10 °C while raising the temperature at a rate of 2.0°C/hour in a freezing resistance, wherein an amount of water separated from said restored aqueous elastic body is 0.01 - 5 wt.% of a weight of said aqueous elastic body before being frozen.

## Patentansprüche

1. Transparenter wäßriger elastischer Körper umfassend:
wenigstens ein Verdickungsmittel, gewählt unter Galactomannanen, und ein Xanthangummi, bei welchem wasserunlösliche Bestandteile zersetzt oder entfernt sind,
**dadurch gekennzeichnet, daß** das Xanthangummi hydrolysiert ist mit einer Protease und teilweise oder vollständig durch Erhitzen modifiziert ist.

2. Transparenter wäßriger elastischer Körper nach Anspruch 1, wobei der wäßrige elastische Körper eine Transmissivität oberhalb 90% T bei einer Temperatur von 25°C mit einer Meßwellenlänge von 655 nm und in einem optischen Meßstrahlengang von 10 mm hat.

3. Transparenter wäßriger elastischer Körper nach Anspruch 1, wobei die Galactomannane, die als Verdickungsmittel gewählt sind, teilweise oder vollständig durch Erhitzen modifiziert sind.

4. Transparenter wäßriger elastischer Körper nach Anspruch 1, wobei das wenigstens eine unter Galactomannanen gewählte Verdickungsmittel und das Xanthangummi ein Gewichtsverhältnis im Bereich von 1:4 bis 4:1 haben.

5. Transparenter wäßriger elastischer Körper nach Anspruch 1, wobei das wenigstens eine unter Galactomannanen gewählte Verdickungsmittel und das Xanthangummi insgesamt eine Dichte von 0,1 bis 10 Gew.-% in einer wäßrigen Zusammensetzung haben.

6. Transparenter wäßriger elastischer Körper nach Anspruch 1, wobei der wäßrige elastische Körper eine Rheologieeigenschaft, einschließlich eines dynamischen, elastischen Speichermoduls G' von 1 bis 1000 Pa und einen elastischen Verlusttangens, tan δ kleiner als 10⁻¹ bei einer Temperatur von 20°C mit einer Frequenz von 1 Hz und eine Deformation von 10⁻¹- 10% hat.

7. Transparenter wäßriger elastischer Körper nach Anspruch 1, wobei der wäßrige elastische Körper eine Rheologieeigenschaft hat, einschließlich eines Verhältnisses zwischen Logarithmen der dynamischen elastischen Speichermodule G' bei Deformationsfaktoren von 1% beziehungsweise 100% bei einer Temperatur von 20°C mit einer Frequenz 1 Hz, das von 1/2 bis 2 reicht.

8. Transparenter wäßriger elastischer Körper nach Anspruch 1, wobei der wäßrige elastische Körper unter Erniedrigen der Temperatur mit einer Geschwindigkeit von -2.0°C/Stunde auf -20°C gefroren wird und dann unter Anheben der Temperatur mit einer Geschwindigkeit von 2.0°C/Stunde bei einer Frostbeständigkeit auf eine Temperatur von 10°C wiedereingestellt wird, wobei eine Wassermenge, die abgetrennt wird von dem wiederhergestellten wäßrigen elastischen Körper 0,01 - 5 Gew.-% des Gewichts des wäßrigen elastischen Körpers ist, bevor er gefroren wird, beträgt.

## Revendications

1. Corps élastique transparent aqueux, comprenant :
au moins un agent épaississant choisi parmi des galactomannanes ; et
une gomme xanthane, dans laquelle les composants insolubles dans l'eau sont décomposés ou éliminés, **caractérisé en ce que** ladite gomme xanthane est hydrolysée par une protéase et est en partie ou complètement modifiée par chauffage.

2. Corps élastique transparent aqueux selon la revendication 1, **caractérisé en ce que** ledit corps élastique transparent aqueux a une transmission supérieure à 90 % à une température de 25°C, avec une longueur d'onde de mesure de 655 nm, et avec un chemin optique de mesure de 10 mm.

3. Corps élastique transparent aqueux selon la revendication 1, **caractérisé en ce que** lesdits galactomannanes choisis comme agents épaississants sont en partie ou complètement modifiés par chauffage.

4. Corps élastique transparent aqueux selon la revendication 1, **caractérisé en ce qu'**au moins un agent épaississant choisi parmi lesdits galactomannanes et ladite gomme xanthane ont un rapport pondéral valant de 1/4 à 4/1.

5. Corps élastique transparent aqueux selon la revendication 1, **caractérisé en ce qu'**au moins un agent épaississant choisi parmi lesdits galactomannanes et ladite gomme xanthane ont une masse volumique de 0,1 à 10 % en poids dans une composition aqueuse.

6. Corps élastique transparent aqueux selon la revendication 1, **caractérisé en ce que** ledit corps élastique transparent aqueux a une propriété rhéologique, comprenant un module d'élasticité de conservation dynamique, G', de 1 à 1000 Pa et une tangente de perte, tan δ, inférieure à 10⁻¹, à une température de 20°C, avec une fréquence de 1Hz et une contrainte de 10⁻¹ à 10 %.

7. Corps élastique transparent aqueux selon la revendication 1, **caractérisé en ce que** ledit corps élastique transparent aqueux a une propriété rhéologique, comprenant un rapport allant de 1/2 à 2, entre les logarithmes du module de conservation dynamique, G', quand les facteurs de contrainte sont respectivement 1 % et 100 %, à une température de 20°C avec une fréquence de 1 Hz.

8. Corps élastique transparent aqueux selon la revendication 1, **caractérisé en ce que** ledit corps élastique transparent aqueux est congelé à -20°C, en abaissant la température à une vitesse de -2°C/heure et puis ramené à une température de 10°C à une vitesse de 2°C/heure avec une résistance à la congélation, **caractérisé en ce que** la quantité d'eau séparée dudit corps élastique transparent aqueux restauré est de 0,01 à 5 % en poids dudit corps élastique transparent aqueux avant qu'il soit congelé.
